# FASCICULE DE BREVET EUROPEEN

(11) **EP 0 840 035 B1**
(45) Date de publication et mention de la délivrance du brevet: **27.06.2001**
(21) Numéro de dépôt: 97402599.1
(22) Date de dépôt: 31.10.1997
(51) Int. Cl.: F16F 13/26

(54) **Support antivibratoire hydraulique**
Hydraulisches, schwingungsdämpfendes Lager
Hydraulic vibration-damping support.

(30) Priorité: 04.11.1996 FR 9613393
(43) Date de publication de la demande: 06.05.1998
(73) Titulaire: HUTCHINSON, 75008 Paris (FR)
(72) Inventeur: Durand, Sylvain, 45190 Villorceau (FR); Gastineau, Jean-Luc, 28220 Montigny-Le-Gannelon (FR)
(74) Mandataire: Burbaud, Eric

(56) Documents cités:
- EP-A- 0 547 287
- DE-A- 3 436 534
- DE-A- 3 933 248
- US-A- 4 793 600
- US-A- 5 246 213
- PATENT ABSTRACTS OF JAPAN vol. 008, no. 230 (M-333), 23 octobre 1984 & JP 59 110931 A (TOYODA GOSEI KK), 27 juin 1984,

## Description

La présente invention est relative aux supports antivibratoires hydrauliques, destinés notamment à supporter les moteurs de véhicules automobiles.

Plus particulièrement, l'invention concerne un support antivibratoire hydraulique destiné à être interposé entre deux éléments rigides pour amortir et atténuer des mouvements vibratoires entre ces deux éléments selon un axe central et pour supporter une charge axiale exercée par l'un de ces deux éléments, ce support comportant :
- des première et deuxième armatures rigides destinées à être solidarisées respectivement avec les deux éléments rigides à réunir,
- un corps en élastomère reliant entre elles les deux armatures, ce corps en élastomère supportant la charge axiale et présentant une paroi latérale en forme de cloche qui s'étend axialement en divergeant depuis un sommet solidaire de la première armature jusqu'à une base annulaire solidaire de la deuxième armature,
- une paroi souple et aisément déformable en élastomère, qui présente un bord périphérique relié de façon étanche à la deuxième armature, en définissant avec celle-ci et le corps en élastomère un boîtier étanche rempli de liquide,
- une cloison rigide qui est solidaire de la deuxième armature et qui s'étend perpendiculairement à l'axe central en séparant ledit boîtier étanche en deux chambres remplies de liquide, savoir d'une part une chambre de travail délimitée partiellement par le corps en élastomère, et d'autre part une chambre de compensation délimitée partiellement par la paroi souple en élastomère,
- un canal étranglé reliant entre elles les chambres de travail et de compensation, ce canal présentant une certaine longueur L et un certain diamètre équivalent D tels que le rapport L/D soit supérieur à 10,
- un ajutage central ménagé dans la cloison rigide pour faire communiquer les chambres de travail et de compensation, cet ajutage central présentant une longueur axiale 1 et un diamètre équivalent d tels que le rapport l/d soit inférieur à 10,
- un obturateur solidaire d'une partie centrale de la paroi souple en élastomère et déplaçable axialement entre d'une part une position de fermeture où il obture l'ajutage et d'autre part une position d'ouverture où il ouvre ledit ajutage,
- un dispositif de commande pour placer sélectivement l'obturateur, soit dans sa position d'ouverture, soit dans sa position de fermeture, ce dispositif de commande incluant un organe d'actionnement qui est solidaire de l'organe d'obturation,
- et au moins un passage ménagé dans la cloison rigide entre les chambres de travail et de compensation, dans une position située radialement à l'extérieur de l'ajutage, ce passage étant obturé par un clapet qui s'étend perpendiculairement à l'axe central et qui présente deux faces opposées communiquant respectivement avec la chambre de travail et avec la chambre de compensation, ledit clapet présentant au moins une partie déplaçable parallèlement à l'axe central entre des première et deuxième butées, avec un jeu inférieur à 1 mm, la première butée étant solidaire de la cloison rigide.

Un tel support antivibratoire hydraulique est divulgué par exemple dans le document EP-A-0 547 287.

Le support antivibratoire présenté dans ce document présente toutefois l'inconvénient que le clapet reste toujours libre de vibrer entre ses deux butées même lorsque l'ajutage central est ouvert.

Or, l'expérience montre que ce phénomène nuit à l'efficacité du fonctionnement de l'ajutage central : autrement dit, alors que l'ouverture de l'ajutage central a essentiellement pour but de diminuer la raideur élastique du support antivibratoire, notamment lorsque le moteur fonctionne au ralenti, le fait que le clapet reste libre de vibrer dans cette situation empêche la raideur élastique du support de diminuer autant qu'elle le pourrait si le clapet était bloqué.

Par ailleurs, le document EP-A-0 297 974 décrit un support antivibratoire hydraulique dans lequel il est prévu de bloquer le clapet de découplage en même temps qu'on ouvre un ajutage entre la chambre de travail et la chambre de compensation.

Le fonctionnement de ce dernier support antivibratoire hydraulique est entièrement satisfaisant, mais ce support présente l'inconvénient de faire appel à des moyens de commande relativement complexes.

De plus, les moyens de commande en question sont alors montés sur le côté du support antivibratoire hydraulique, ce qui augmente l'encombrement de ce support et complique notablement son montage et son remplissage.

La présente invention a pour but de pallier les différents inconvénients susmentionnés.

A cet effet, selon l'invention, un support antivibratoire hydraulique du genre en question est essentiellement caractérisé en ce que la deuxième butée du clapet est elle-même montée avec un jeu axial inférieur à 1 mm entre le clapet et une contre-butée solidaire de la cloison rigide, cette deuxième butée étant en liaison mécanique avec l'obturateur, la deuxième butée étant appliquée contre le clapet par l'obturateur lorsqu'il est dans sa position d'ouverture, en empêchant alors sensiblement tout mouvement axial du clapet, et ladite deuxième butée étant appliquée contre la contre-butée par l'obturateur lorsqu'il est dans sa position de fermeture.

Dans des modes de réalisation préférés, on peut éventuellement avoir recours en outre à l'une et/ou à l'autre des dispositions suivantes :
- la première butée est en contact avec la face du clapet qui communique avec la chambre de compensation tandis que la deuxième butée est en contact avec la face du clapet qui communique avec la chambre de travail, l'ajutage étant délimité extérieurement par un tube qui s'étend selon l'axe central, à partir d'une première extrémité solidaire de la deuxième butée, en direction de la paroi souple en élastomère jusqu'à une deuxième extrémité qui présente au moins un rebord extérieur, l'obturateur étant appliqué axialement contre cette deuxième extrémité vers le corps en élastomère lorsque ledit obturateur est dans sa position de fermeture en appliquant alors axialement la deuxième butée sur la contre-butée, et l'obturateur étant solidaire d'un ensemble de griffes entourant le tube et coulissant axialement autour de ce tube, ces griffes étant dimensionnées pour buter sur le rebord de la deuxième extrémité de ce tube en tirant alors ledit tube et la deuxième butée vers la paroi souple en élastomère lorsque l'obturateur est dans sa position d'ouverture, de sorte que ladite deuxième butée est alors appliquée contre le clapet;
- les griffes sont constituées par des pattes métalliques élastiques qui sont découpées dans une même pièce de tôle fixée à l'obturateur et qui sont encliquetées sur le tube délimitant l'ajutage ;
- la pièce de tôle dans laquelle sont découpées les pattes élastiques présente une partie centrale qui est interposée entre l'obturateur et la paroi souple en élastomère, chaque patte élastique s'étendant en biais axialement en direction de la cloison rigide et radialement vers l'intérieur à partir de cette partie centrale jusqu'à une extrémité libre qui forme un rabat axial en appui élastique contre le tube et dirigé vers le rebord extérieur de ce tube ;
- les griffes sont au nombre de deux et sont disposées de part et d'autre du tube qui délimite l'ajutage ;
- le dispositif de commande consiste en une capsule à dépression qui est disposée au voisinage de la paroi souple en élastomère à l'extérieur du boîtier étanche, cette capsule à dépression présentant un volume intérieur creux qui communique, par l'intermédiaire d'une électro-vanne, soit avec l'atmosphère, soit avec une source de dépression, ce volume intérieur creux étant partiellement délimité par une paroi mobile qui constitue l'organe d'actionnement de l'obturateur et qui est déplaçable axialement vers l'intérieur de la capsule à dépression en entraînant l'obturateur jusqu'à sa position ouverte et en appliquant la deuxième butée contre le clapet lorsque la capsule à dépression communique avec la source de dépression, et le volume intérieur de la capsule à dépression comportant en outre des moyens élastiques qui sollicitent la paroi mobile vers le boîtier étanche rempli de liquide en plaçant ainsi l'obturateur dans sa position fermée et en appliquant la deuxième butée sur la contre-butée correspondante lorsque la capsule à dépression communique avec l'atmosphère ;
- les moyens élastiques sont constitués par un ressort ;
- la capsule à dépression présente une paroi rigide fixe qui est solidarisée avec la deuxième armature, la paroi mobile de cette capsule présentant une partie centrale rigide qui est reliée de façon étanche à la paroi fixe par l'intermédiaire d'un soufflet annulaire en élastomère ;
- le clapet présente une forme annulaire entourant l'ajutage central, les première et deuxième butées du clapet étant constituées par des grilles annulaires ;
- l'obturateur est constitué par une rondelle rigide surmoulée d'élastomère, la partie centrale de la paroi souple en élastomère présentant elle-même une rondelle rigide surmoulée d'élastomère, ces deux rondelles et l'organe d'actionnement de l'obturateur étant solidarisés ensemble par l'intermédiaire d'un rivet qui les traverse axialement ;
- la première butée est en contact avec la face du clapet qui communique avec la chambre de compensation tandis que la deuxième butée est en contact avec la face du clapet qui communique avec la chambre de travail, l'ajutage étant délimité extérieurement par un tube qui s'étend selon l'axe central, à partir d'une première extrémité solidaire de la deuxième butée, en direction de la paroi souple en élastomère jusqu'à une deuxième extrémité voisine de l'obturateur, l'obturateur étant appliqué axialement contre cette deuxième extrémité vers le corps en élastomère lorsque ledit obturateur est dans sa position de fermeture en appliquant alors axialement la deuxième butée sur la contre-butée, et l'obturateur étant solidaire d'au moins un organe rigide coulissant axialement par rapport au tube, cet organe rigide comportant au moins un rabat adapté pour buter contre une partie solidaire de la deuxième butée lorsque ledit obturateur est dans sa position d'ouverture, en tirant alors ledit tube et ladite deuxième butée vers la paroi souple en élastomère lorsque l'obturateur est dans sa position d'ouverture, de sorte que ladite deuxième butée est alors appliquée contre le clapet.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue en coupe verticale d'un support antivibratoire hydraulique selon une forme de réalisation de l'invention, avec son ajutage central fermé,
- et la figure 2 est une vue partielle du support de la figure 1, avec son ajutage central ouvert.

Dans la description qui suit, les termes tels que "haut", "bas", "supérieur", "inférieur", etc. sont utilisés uniquement afin de rendre la description plus claire, mais ne sont en aucune façon limitatifs.

Le support antivibratoire hydraulique considéré ici est destiné à être interposé verticalement entre un bloc motopropulseur de véhicule et un châssis de véhicule, pour supporter le poids du bloc motopropulseur et pour amortir et atténuer des mouvements vibratoires entre ces deux éléments selon un axe vertical Z.

Ce support antivibratoire comporte :
- une première armature rigide 1 métallique qui peut être fixée par exemple au bloc motopropulseur, cette première armature étant constituée par un plot central 2 prolongé vers le haut par un goujon 3 qui permet la fixation à un élément solidaire du bloc motopropulseur,
- une deuxième armature rigide 4 métallique en forme d'anneau centré sur l'axe Z, cette deuxième armature formant un plateau 5 qui présente localement des pattes de fixation (non représentées) percées de trous pour fixer la deuxième armature au châssis,
- un corps en élastomère 6 reliant entre elles les deux armatures 1, 4, ce corps en élastomère étant suffisamment résistant pour supporter la charge axiale imposée au support par le bloc motopropulseur, et ledit corps en élastomère présentant une paroi latérale en forme de cloche qui peut présenter une forme de révolution centrée sur l'axe Z et qui s'étend en divergeant vers le bas depuis un sommet solidaire de la première armature jusqu'à une base annulaire solidaire de la deuxième armature,
- une paroi souple 7 aisément déformable en élastomère, qui présente un bord périphérique relié de façon étanche à la deuxième armature 4, en définissant avec celle-ci et le corps en élastomère un boîtier étanche rempli de liquide,
- et une cloison rigide 8 qui est solidarisée avec la deuxième armature 4 par sertissage de ladite deuxième armature et qui s'étend perpendiculairement à l'axe Z en séparant le boîtier étanche en deux chambres remplies de liquide, savoir d'une part une chambre de travail A délimitée partiellement par le corps en élastomère 6, et d'autre part une chambre de compensation B délimitée partiellement par la paroi souple en élastomère 7.

La cloison 8, quant à elle, comporte une plaque métallique inférieure 9 qui présente un bord extérieur épaissi dans lequel est formée une gorge 10 débouchant axialement vers le haut. Cette gorge est recouverte par une rondelle métallique 11, l'empilement de la plaque 9 et de la rondelle 11 étant maintenu serré axialement par le sertissage de la deuxième armature 4.

La gorge 10 délimite avec la rondelle 11 un canal étranglé 12 qui s'étend angulairement entre deux extrémités séparées l'une de l'autre par une partie pleine du bord épaissi de la plaque 9.

Ce canal étranglé débouche, d'une part, axialement dans la chambre de travail A par l'intermédiaire d'un orifice 13 ménagé dans la rondelle 11, et il débouche d'autre part radialement vers l'intérieur dans la chambre de compensation B, par l'intermédiaire d'un orifice 14 ménagé dans la plaque inférieure 9.

Le canal étranglé 12 présente une certaine longueur L et un certain diamètre équivalent D (D = 2[S/π]^{½}, où S est la section droite moyenne du canal 12) tels que le rapport L/D soit supérieur à 10, et généralement compris entre 10 et 100.

Ce canal étranglé 12 permet d'amortir efficacement les mouvements vibratoires relatifs de relativement faible fréquence (par exemple, inférieure à 20 Hz) et de relativement grande amplitude (par exemple, supérieure à 1 mm) entre le bloc motopropulseur et le châssis du véhicule, ces mouvements vibratoires étant dus notamment au roulement du véhicule.

Par ailleurs, la plaque inférieure 9 présente un orifice central 15, et cette plaque forme en outre, entre son bord épaissi et l'orifice 15, une grille annulaire 16, plate et horizontale.

La cloison 8 comporte en outre une pièce métallique annulaire 17 présentant une forme générale de révolution autour de l'axe Z et comportant une grille plate 18 horizontale dont le bord radial intérieur se prolonge axialement vers le bas par un tube 19. Ce tube 19 s'étend jusqu'à une extrémité inférieure dotée d'un rebord extérieur saillant 20 qui forme un épaulement dirigé vers le haut.

Le tube 19 est emboîté avec jeu dans l'orifice central 15 de la plaque 9, cet orifice central étant suffisamment large pour permettre le passage du rebord 20.

Par ailleurs, la grille 18 est disposée au-dessus de la grille 16 et elle est maintenue au voisinage de ladite grille 16 par l'intermédiaire du bord intérieur lla de la rondelle 11, qui recouvre la périphérie de ladite grille 18.

De plus, entre les deux grilles 16 et 18 est logé un clapet 21 qui se présente sous la forme d'une mince rondelle plate d'élastomère dont les bords extérieur et intérieur sont en contact radial étanche respectivement avec le bord extérieur épais de la plaque 9 et avec le tube 19.

Eventuellement, pour faciliter ce contact étanche, les bords intérieur et extérieur du clapet 21 peuvent former des lèvres d'étanchéité amincies, le bord intérieur de ce clapet présentant par exemple un profil biseauté qui forme une lèvre d'étanchéité unique, et le bord extérieur du clapet présentant par exemple une rainure radiale annulaire qui délimite deux lèvres d'étanchéité.

Lorsque la grille 18 est en butée contre la rondelle 11, le clapet 21 est librement déplaçable axialement entre les grilles 16 et 18, avec un faible jeu axial, généralement inférieur à 1 mm et par exemple, de l'ordre de 0,5 mm.

Dans cette configuration, le clapet 21 permet d'absorber les mouvements vibratoires du bloc motopropulseur de relativement haute fréquence (par exemple, supérieure à 50 Hz) et de relativement faible amplitude (par exemple, inférieure à 1 mm).

Par ailleurs, le tube 19 délimite intérieurement un ajutage 22 qui fait communiquer directement la chambre de travail A avec la chambre de compensation B et qui présente une longueur 1 et un diamètre d (ou un diamètre équivalent d, avec la même définition que celle donnée précédemment pour le diamètre D) tels que le rapport 1/d soit inférieur à 10, par exemple compris entre 0,5 et 10.

Cet ajutage 22 peut être sélectivement fermé ou ouvert au moyen d'un obturateur 23 commandé par exemple par une capsule à dépression 24 située sous la paroi souple 7.

L'obturateur 23 se présente par exemple sous la forme d'une rondelle d'élastomère qui est surmoulée sur une rondelle métallique 25, laquelle est solidarisée avec une autre rondelle métallique 26 également surmoulée d'élastomère, qui constitue la partie centrale de la paroi souple 7.

Entre les deux rondelles 25 et 26 est interposée la partie centrale d'une pièce de tôle découpée 27 qui se prolonge radialement vers l'extérieur par deux pattes élastiques 28 diamétralement opposées qui sont repliées vers le haut et vers le tube 19, chacune de ces pattes 28 se terminant par un rabat 29 replié vers le bas et coulissant contre la surface extérieure du tube 19.

Eventuellement, les pattes 28 pourraient être au nombre de trois.

Par ailleurs, la capsule à dépression 24 comporte :
- une paroi de tôle rigide 30, en forme de cuvette,
- un anneau métallique rigide 31 empilé sur la périphérie de la paroi 30 et solidarisé avec cette paroi ainsi qu'avec la deuxième armature 4, l'ensemble constitué par le pourtour de la paroi souple 7, le pourtour de l'anneau 31 et le pourtour de la paroi 30 étant serré axialement contre le dessous de la plaque métallique 9 par sertissage de la deuxième armature 4,
- et une paroi mobile 32 qui comporte une plaque centrale métallique rigide 33 horizontale reliée à l'anneau 31 par l'intermédiaire d'un soufflet annulaire d'élastomère 34 surmoulé sur les bords respectivement intérieur et extérieur de l'anneau 31 et de la plaque 33.

La plaque 33 est solidarisée avec la partie centrale de la paroi souple 7 en élastomère au moyen d'un rivet 35 qui traverse et solidarise l'empilage constitué par la rondelle 25, la partie centrale de la pièce de tôle 27, la rondelle 26, et la plaque 33.

La capsule à dépression 24 présente, entre les parois 30 et 32, un volume intérieur 36 qui communique soit avec l'atmosphère, soit avec une source de dépression 37 (circuit d'admission d'air du moteur ou éventuellement pompe à vide), par l'intermédiaire d'une électro-vanne 38 à trois voies qui est elle-même commandée par un calculateur 39 ou un autre système de contrôle.

De plus, un ressort de compression 40 est disposé entre la paroi 30 et la plaque 33, de façon à solliciter la plaque 33 vers le haut.

On notera par ailleurs que la paroi 30 et l'anneau 31 sont percés d'au moins un orifice 41 au-dessus de la paroi mobile 32, pour faire communiquer avec l'atmosphère l'espace intermédiaire compris entre la paroi 32 et la paroi souple 7, de façon que ces deux parois soient librement déformables sans engendrer de surpression ou de dépression dans cet espace intermédiaire.

Pendant le fonctionnement normal du véhicule, l'électro-vanne 38 fait communiquer avec l'atmosphère le volume intérieur 36 de la capsule à dépression, de sorte que l'obturateur 23 se trouve appliqué axialement contre l'extrémité inférieure du tube 19 enfermant ainsi l'ajutage 22.

Par conséquent, la grille 18, qui est solidaire du tube 19, est également appliquée en butée contre le bord intérieur de la rondelle 11, de sorte que le clapet 21 est librement déplaçable verticalement entre les deux grilles 16 et 18.

En revanche, dans certains modes de fonctionnement du véhicule, et notamment lorsque le moteur fonctionne au ralenti, il est souhaitable d'immobiliser le clapet 21 et d'ouvrir l'ajutage 22.

A cet effet, le calculateur 39 commande l'électro-vanne 38 pour faire communiquer le volume intérieur 36 de la capsule à dépression avec la source de dépression 37.

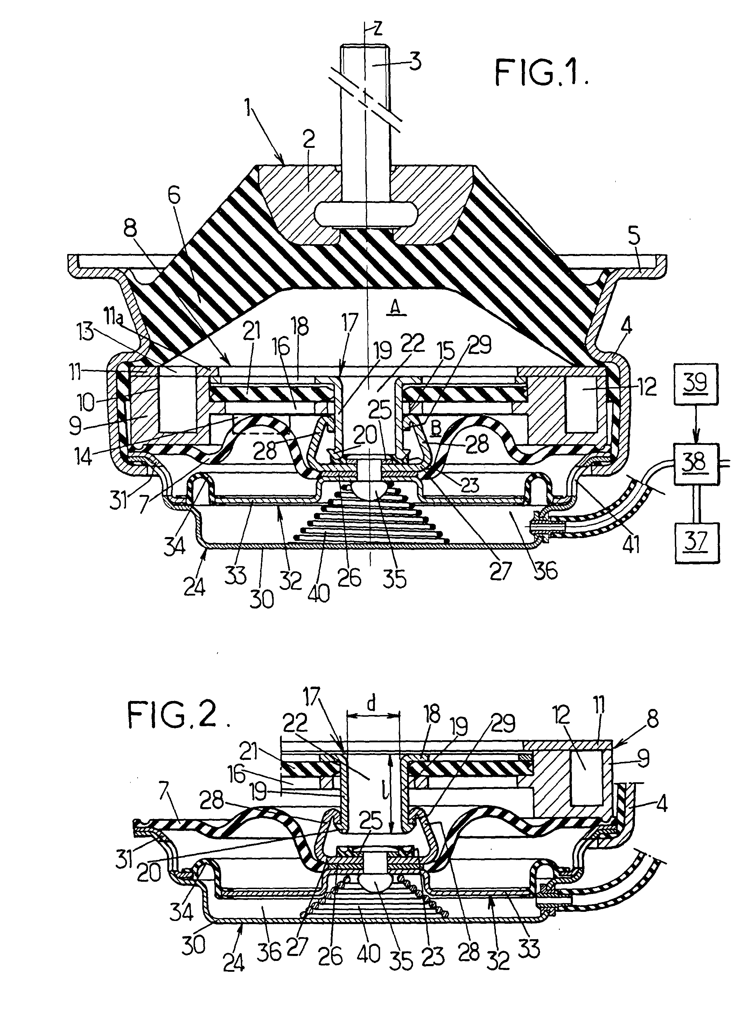

Dans ce cas, comme représenté sur la figure 2, la paroi mobile 32 de la capsule à dépression est déplacée vers le bas contre la sollicitation élastique du ressort 40, en ouvrant ainsi l'ajutage 22.

De plus, les rabats 29 des pattes 28 viennent alors buter contre le rebord extérieur 20 du tube 19, en tirant ainsi vers le bas la grille 18, qui vient alors elle-même buter contre le clapet 21 en l'immobilisant.

Dans cette position, on obtient une très faible raideur élastique du support antivibratoire, donc une excellent absorption des vibrations produites par le moteur, à des fréquences voisines par exemple de 30 Hz.

## Revendications

1. Support antivibratoire hydraulique destiné à être interposé entre deux éléments rigides pour amortir et atténuer des mouvements vibratoires entre ces deux éléments selon un axe central (Z) et pour supporter une charge axiale exercée par l'un de ces deux éléments, ce support comportant
- des première et deuxième armatures rigides (1, 4) destinées à être solidarisées respectivement avec les deux éléments rigides à réunir,
- un corps en élastomère (6) reliant entre elles les deux armatures, ce corps en élastomère supportant la charge axiale et présentant une paroi latérale en forme de cloche qui s'étend axialement en divergeant depuis un sommet solidaire de la première armature (1) jusqu'à une base annulaire solidaire de la deuxième armature (4),
- une paroi souple et aisément déformable (7) en élastomère, qui présente un bord périphérique relié de façon étanche à la deuxième armature (4), en définissant avec celle-ci et le corps en élastomère (6) un boîtier étanche rempli de liquide,
- une cloison rigide (8) qui est solidaire de la deuxième armature (4) et qui s'étend perpendiculairement à l'axe central (Z) en séparant ledit boîtier étanche en deux chambres remplies de liquide, savoir d'une part une chambre de travail (A) délimitée partiellement par le corps en élastomère, et d'autre part une chambre de compensation (B) délimitée partiellement par la paroi souple en élastomère,
- un canal étranglé (12) reliant entre elles les chambres de travail et de compensation (A, B), ce canal présentant une certaine longueur L et un certain diamètre équivalent D tels que le rapport L/D soit supérieur à 10,
- un ajutage central (22) ménagé dans la cloison rigide pour faire communiquer les chambres de travail et de compensation (A, B), cet ajutage central présentant une longueur axiale 1 et un diamètre équivalent d tels que le rapport 1/d soit inférieur à 10,
- un obturateur (23) solidaire d'une partie centrale de la paroi souple (7) en élastomère et déplaçable axialement entre d'une part une position de fermeture où il obture l'ajutage (22) et d'autre part une position d'ouverture où il ouvre ledit ajutage,
- un dispositif de commande (24) pour placer sélectivement l'obturateur, soit dans sa position d'ouverture, soit dans sa position de fermeture, ce dispositif de commande incluant un organe d'actionnement (32) qui est solidaire de l'organe d'obturation,
- et au moins un passage ménagé dans la cloison rigide (8) entre les chambres de travail et de compensation (A,B), dans une position située radialement à l'extérieur de l'ajutage (22), ce passage étant obturé par un clapet (21) qui s'étend perpendiculairement à l'axe central (Z) et qui présente deux faces opposées communiquant respectivement avec la chambre de travail et avec la chambre de compensation, ledit clapet présentant au moins une partie déplaçable parallèlement à l'axe central (Z) entre des première et deuxième butées (16,18), avec un jeu inférieur à 1 mm, la première butée (16) étant solidaire de la cloison rigide,
**caractérisé en ce que** la deuxième butée (18) du clapet est elle-même montée avec un jeu axial inférieur à 1 mm entre le clapet (21) et une contre-butée (11a) solidaire de la cloison rigide, cette deuxième butée étant en liaison mécanique avec l'obturateur (23), la deuxième butée étant appliquée contre le clapet par l'obturateur lorsqu'il est dans sa position d'ouverture, en empêchant alors sensiblement tout mouvement axial du clapet, et ladite deuxième butée étant appliquée contre la contre-butée par l'obturateur lorsqu'il est dans sa position de fermeture.

2. Support antivibratoire hydraulique selon la revendication 1, dans lequel la première butée (16) est en contact avec la face du clapet (21) qui communique avec la chambre de compensation tandis que la deuxième butée (18) est en contact avec la face du clapet qui communique avec la chambre de travail, l'ajutage étant délimité extérieurement par un tube (19) qui s'étend selon l'axe central (Z), à partir d'une première extrémité solidaire de la deuxième butée (18), en direction de la paroi souple (7) en élastomère jusqu'à une deuxième extrémité qui présente au moins un rebord extérieur (20), l'obturateur (23) étant appliqué axialement contre cette deuxième extrémité vers le corps en élastomère (6) lorsque ledit obturateur est dans sa position de fermeture en appliquant alors axialement la deuxième butée (18) sur la contre-butée (11a), et l'obturateur étant solidaire d'un ensemble de griffes (28) entourant le tube (19) et coulissant axialement autour de ce tube, ces griffes étant dimensionnées pour buter sur le rebord (20) de la deuxième extrémité de ce tube en tirant alors ledit tube et la deuxième butée vers la paroi souple en élastomère lorsque l'obturateur est dans sa position d'ouverture, de sorte que ladite deuxième butée est alors appliquée contre le clapet.

3. Support antivibratoire hydraulique selon la revendication 2, dans lequel les griffes (28) sont constituées par des pattes métalliques élastiques qui sont découpées dans une même pièce de tôle (27) fixée à l'obturateur (23) et qui sont encliquetées sur le tube (19) délimitant l'ajutage.

4. Support antivibratoire hydraulique selon la revendication 3, dans lequel la pièce de tôle (27) dans laquelle sont découpées les pattes élastiques (28) présente une partie centrale qui est interposée entre l'obturateur (23) et la paroi souple (7) en élastomère, chaque patte élastique s'étendant en biais axialement en direction de la cloison rigide (8) et radialement vers l'intérieur à partir de cette partie centrale jusqu'à une extrémité libre qui forme un rabat axial (29) en appui élastique contre le tube et dirigé vers le rebord extérieur (20) de ce tube.

5. Support antivibratoire hydraulique selon l'une quelconque des revendications 2 à 4, dans lequel les griffes (28) sont au nombre de deux et sont disposées de part et d'autre du tube (19) qui délimite l'ajutage.

6. Support antivibratoire hydraulique selon l'une quelconque des revendications précédentes, dans lequel le dispositif de commande consiste en une capsule à dépression (24) qui est disposée au voisinage de la paroi souple (7) en élastomère à l'extérieur du boîtier étanche, cette capsule à dépression présentant un volume intérieur creux (36) qui communique, par l'intermédiaire d'une électro-vanne (38), soit avec l'atmosphère, soit avec une source de dépression (37), ce volume intérieur creux étant partiellement délimité par une paroi mobile (32) qui constitue l'organe d'actionnement de l'obturateur et qui est déplaçable axialement vers l'intérieur de la capsule à dépression en entraînant l'obturateur (23) jusqu'à sa position ouverte et en appliquant la deuxième butée (18) contre le clapet (21) lorsque la capsule à dépression communique avec la source de dépression, et le volume intérieur de la capsule à dépression comportant en outre des moyens élastiques (40) qui sollicitent la paroi mobile (32) vers le boîtier étanche rempli de liquide, en plaçant ainsi l'obturateur (23) dans sa position fermée et en appliquant la deuxième butée (18) sur la contre-butée (11a) correspondante lorsque la capsule à dépression communique avec l'atmosphère.

7. Support antivibratoire hydraulique selon la revendication 6, dans lequel les moyens élastiques (40) sont constitués par un ressort.

8. Support antivibratoire hydraulique selon la revendication 6 ou la revendication 7, dans lequel la capsule à dépression (24) présente une paroi rigide fixe (30) qui est solidarisée avec la deuxième armature (4), la paroi mobile (32) de cette capsule présentant une partie centrale rigide (33) qui est reliée de facon étanche à la paroi fixe par l'intermédiaire d'un soufflet annulaire (34) en élastomère.

9. Support antivibratoire hydraulique selon l'une quelconque des revendications précédentes, dans lequel le clapet (21) présente une forme annulaire entourant l'ajutage central (22), les première et deuxième butées (16, 18) du clapet étant constituées par des grilles annulaires.

10. Support antivibratoire hydraulique selon l'une quelconque des revendications précédentes, dans lequel l'obturateur (23) est constitué par une rondelle rigide (25) surmoulée d'élastomère, la partie centrale de la paroi souple (7) en élastomère présentant elle-même une rondelle rigide (26) surmoulée d'élastomère, ces deux rondelles et l'organe d'actionnement (32) de l'obturateur étant solidarisés ensemble par l'intermédiaire d'un rivet (35) qui les traverse axialement.

11. Support antivibratoire hydraulique selon l'une quelconque des revendications précédentes, dans lequel la première butée (16) est en contact avec la face du clapet (21) qui communique avec la chambre de compensation tandis que la deuxième butée (18) est en contact avec la face du clapet qui communique avec la chambre de travail, l'ajutage (22) étant délimité extérieurement par un tube (19) qui s'étend selon l'axe central (Z), à partir d'une première extrémité solidaire de la deuxième butée (18), en direction de la paroi souple (7) en élastomère jusqu'à une deuxième extrémité voisine de l'obturateur (23), l'obturateur (23) étant appliqué axialement contre cette deuxième extrémité vers le corps en élastomère (6) lorsque ledit obturateur est dans sa position de fermeture en appliquant alors axialement la deuxième butée (18) sur la contre-butée (11a), et l'obturateur étant solidaire d'au moins un organe rigide (28) coulissant axialement par rapport au tube (19), cet organe rigide (28) comportant au moins un rabat (29) adapté pour buter contre une partie (20) solidaire de la deuxième butée (18) lorsque ledit obturateur est dans sa position d'ouverture, en tirant alors ledit tube (19) et ladite deuxième butée (18) vers la paroi souple en élastomère lorsque l'obturateur est dans sa position d'ouverture, de sorte que ladite deuxième butée est alors appliquée contre le clapet (21) .

## Claims

1. A hydraulic antivibration support designed to be interposed between two rigid elements to damp and attenuate vibratory motion between said two elements along a central axis (Z) and to support an axial load exerted by one of said two elements, the support comprising:
· first and second rigid strength members (1, 4) designed to be secured to respective ones of the two rigid elements to be united;
· an elastomer body (6) connecting the two strength members together, said elastomer body supporting the axial load and having a bell-shaped side wall which extends axially, flaring downwards from a top secured to the first strength member (1) to an annular base secured to the second strength member (4);
· a flexible and easily deformable wall (7) of elastomer having a peripheral edge connected in sealed manner to the second strength member (4), and co-operating therewith and with the elastomer body (6) to define a sealed housing filled with liquid;
· a rigid partition (8) which is secured to the second strength member (4) and which extends perpendicularly to the central axis (Z), thereby subdividing said sealed housing into two liquid-filled chambers, namely a working chamber (A) defined in part by the elastomer body, and a compensation chamber (B) defined in part by the flexible elastomer wall;
· a narrow passage (12) interconnecting the working and compensation chambers (A, B), said channel having a certain length L and a certain equivalent diameter D such that the ratio L/D is greater than 10;
· a central nozzle (22) formed through the rigid partition to put the working and compensation chambers (A, B) into communication with each other, said central nozzle having an axial length 1 and an equivalent diameter d such that the ratio l/d is less than 10;
· a shutter (23) secured to a central portion of the flexible elastomer wall (7) and displaceable axially between a closed position in which it closes the nozzle (22) and an open position in which it opens said nozzle;
· a control device (24) for selectively placing the shutter either in its open position or in its closed position, said control device including an actuator member (32) which is secured to the shutter member; and
· at least one passage formed through the rigid partition (8) between the working and compensation chambers (A, B), at a position that is situated radially outside the nozzle (22), said passage being closed by a flap (21) which extends perpendicularly to the central axis (Z) and which has two opposite faces respectively in communication with the working chamber and with the compensation chamber, said flap having at least a portion that is displaceable parallel to the central axis (Z) between first and second abutments (16, 18) with clearance of less than 1 mm, the first abutment (16) being secured to the rigid partition;
the support being characterized in that the second abutment (18) for the flap is itself mounted with axial clearance of less than 1 mm between the flap (21) and a counter-abutment (lla) secured to the rigid partition, said second abutment being mechanically linked with the shutter (23), the second abutment being pressed against the flap by the shutter when it is in its open position, then preventing substantially all axial movement of the flap, and said second abutment being pressed against the counter-abutment by the shutter when it is in its closed position.

2. A hydraulic antivibration support according to claim 1, in which the first abutment (16) is in contact with the face of the flap (21) that is in communication with the compensation chamber, while the second abutment (18) is in contact with the face of the flap that is in communication with the working chamber, the outside of the nozzle being defined by a tube (19) which extends along the central axis (Z) from a first end secured to the second abutment (18) towards the flexible elastomer wall (7) to a second end having at least an outwardly-directed flange (20), the shutter (23) being pressed axially against said second end towards the elastomer body (6) when said shutter is in its closed position, thereby axially pressing the second abutment (18) against the counter-abutment (lla), and the shutter being secured to a set of catches (28) surrounding the tube (19) and sliding axially along the tube, said catches being designed to engage with the flange (20) at the second end of the tube, thereby pulling said tube and the second abutment towards the flexible elastomer wall when the shutter is in its open position, such that the second abutment is then pressed against the flap.

3. A hydraulic antivibration support according to claim 2, in which the catches (28) are constituted by resilient metal tabs which are cut out from a piece (27) of sheet metal fixed to the shutter (23) and which are snapped against the tube (19) defining the nozzle.

4. A hydraulic antivibration support according to claim 3, in which the piece (27) of sheet metal from which the resilient tabs (28) are cut out has a central portion which is interposed between the shutter (28) and the flexible elastomer wall (7), each resilient tab extending at an angle axially towards the rigid partition (8) and radially inwards from said central portion to a free end which has an axial lip (29) bearing resiliently against the tube and directed towards the outwardly-directed flange (20) of said tube.

5. A hydraulic antivibration support according to any one of claims 2 to 4, in which there are two catches (28) which are disposed on opposite sides of the tube (19) which defines the nozzle.

6. A hydraulic antivibration support according to any preceding claim, in which the control device consists in a suction capsule (24) disposed in the vicinity of the flexile elastomer wall (7) outside the sealed housing, said suction capsule having a hollow inside volume (36) in communication, via an electrically controlled valve (38), either with the atmosphere or else with a suction source (37), said hollow inside volume being defined in part by a moving wall (32) which constitutes the member for actuating the shutter and which is axially displaceable towards the inside of the suction capsule, entraining the shutter (23) to its open position and pressing the second abutment (18) against the flap (21) when the suction capsule is in communication with the suction source, and the inside volume of the suction capsule also including elastic means(40) urging the moving wall (32) towards the liquid-filled sealed housing, thereby placing the shutter (23) in its closed position and pressing the second abutment (18) against the corresponding counter-abutment (lla) when the suction capsule is in communication with the atmosphere.

7. A hydraulic antivibration device according to claim 6, in which the elastic means (40) are constituted by a spring.

8. A hydraulic antivibration support according to claim 6 or claim 7, in which the suction capsule (24) has a fixed rigid wall (30) which is secured to the second strength member (4), the moving wall (32) of said capsule having a rigid central portion (33) which is connected in sealed manner to the fixed wall via an annular bellows (34) of elastomer.

9. A hydraulic antivibration support according to any preceding claim, in which the flap (21) is annular in shape, surrounding the central nozzle (22), the first and second abutments (16, 18) for the flap being constituted by annular grids.

10. A hydraulic antivibration support according to any preceding claim, in which the shutter (23) is constituted by a rigid washer (25) having elastomer overmolded thereon, the central portion of the flexible elastomer wall (7) itself having a rigid washer (26) with elastomer overmolded thereon, these two washers and the actuator member (32) of the shutter being connected together by means of a rivet (35) which passes through them axially.

11. A hydraulic antivibration support according to any preceding claim, in which the first abutment (16) is in contact with the face of the flap (21) which communicates with the compensation chamber while the second abutment (18) is in contact with the face of the flap which communicates with the working chamber, the nozzle (22) being externally delimited by a tube (19) which extends along the central axis (Z), from a first end which is rigid with the second abutment (18), towards the flexible elastomer wall (7) up to a second end near the shutter (23), the shutter (23) being axially biassed against said second end towards the elastomer body when said shutter is in its closed position, thus applying then axially the second abutment (18) on the counter abutment (11a), and the shutter being fastened to at least one rigid member (28) sliding axially with regard to the tube (19), this rigid member (28) including at least one folded lip (29) which is adapted for coming into abutment against a part (20) rigid with the second abutment (18) when said shutter is in its open position, thus drawing then said tube (19) and said second abutment (18) towards the elastomer flexible wall when the shutter is in its open position, so that said second abutment is then biassed against the flap (21).

## Patentansprüche

1. Hydraulische vibrationsdämpfende Aufhängung zur Anordnung zwischen zwei starren Elementen zum Dämpfen und Abschwächen von Vibrationsbewegungen zwischen diesen beiden Elementen in einer zentralen Achse (Z) und zum Tragen einer axialen Last, die von einem dieser zwei Elemente ausgeübt wird, wobei die Aufhängung aufweist:
- eine erste und eine zweite Steifbewehrung (1, 4), die dazu bestimmt sind, jeweils fest mit den beiden starren Elementen verbunden zu werden,
- einen Körper aus Elastomermaterial (6), der die beiden Bewehrungen miteinander verbindet, wobei dieser Körper aus Elastomermaterial die axiale Last trägt und eine glockenförmige Seitenwand aufweist, die sich in Axialrichtung von ein Spitze aus, die mit der ersten Bewehrung (1) fest verbunden ist, erweiternd bis zu einer ringförmigen Basis erstreckt, die mit der zweiten Bewehrung (4) fest verbunden,
- eine biegsame und leicht verformbare Wand (7) aus Elastomermaterial, die einen Umfangsrand aufweist, der dicht mit der zweiten Bewehrung (4) verbunden ist und dabei mit dieser und dem Körper aus Elastomermaterial (6) ein dichtes Gehäuse bildet, das mit Flüssigkeit gefüllt ist,
- eine starre Trennwand (8), die mit der zweiten Bewehrung (4) fest verbunden ist und sich im rechten Winkel zu der zentralen Achse (Z) erstreckt, wobei sie dieses dichte Gehäuse in zwei Kammern unterteilt, die mit Flüssigkeit gefüllt sind, und zwar einerseits in eine Arbeitskammer (A), die teilweise durch den Körper aus Elastomermaterial begrenzt ist, und andererseits in eine Ausgleichskammer (B), die teilweise durch die biegsame Wand aus Elastomermaterial begrenzt ist,
- einen engen Kanal (12), der die Arbeitskammer (A) und die Ausgleichskammer (B) miteinander verbindet, wobei dieser Kanal eine bestimmte Länge L und einen bestimmten Äquivalentdurchmesser D dergestalt aufweist, dass das Verhältnis L/D größer als 10 ist,
- einen zentralen Stutzen (22), der in der starren Trennwand zum Schaffen einer Verbindung der Arbeitskammer (A) und der Ausgleichskammer (B) gebildet ist, wobei dieser zentrale Stutzen eine axiale Länge 1 und einen Äquivalentdurchmesser d dergestalt aufweist, dass das Verhältnis 1/d kleiner als 10 ist,
- einen Verschluss (23), der mit einem zentralen Teil der biegsamen Wand (7) aus Elastomermaterial fest verbunden ist und axial verschiebbar ist, zwischen einer Schließstellung einerseits, in der er den Stutzen (22) verschließt, und einer Öffnungsstellung andererseits, in der er diesen Stutzen öffnet,
- eine Steuervorrichtung (24) zum wahlweisen Verbringen des Verschlusses in seine Öffnungsstellung oder in seine Schließstellung, wobei diese Steuervorrichtung ein Betätigungsorgan (32) enthält, das fest mit dem Verschlussorgan verbunden ist, und
- zumindest einen Durchlass, der in der starren Trennwand (8) zwischen der Arbeitskammer (A) und der Ausgleichskammer (B) an einer Stelle ausgeführt ist, die sich radial außerhalb des Ansatzrohrs (22) befindet, wobei dieser Durchlass durch eine Klappe (21) verschlossen wird, die sich im rechten Winkel zu der zentralen Achse (Z) erstreckt und die zwei voneinander abgewandte Seiten aufweist, die mit der Arbeitskammer bzw. mit der Ausgleichskammer in Verbindung stehen, wobei diese Klappe zumindest einen Teil aufweist, der zwischen einem ersten Anschlag (16) und einem zweiten Anschlag (18) mit einem Spiel von weniger als 1 mm parallel zu der zentralen Achse (Z) verschiebbar ist, wobei der erste Anschlag (16) fest mit der starren Trennwand verbunden ist,
dadurch **gekennzeichnet**, dass der zweite Anschlag (18) der Klappe seinerseits mit einem axialen Spiel von weniger als 1 mm zwischen der Klappe (21) und einem fest mit der starren Trennwand verbundenen Gegenanschlag (11a) angebracht ist, wobei dieser zweite Anschlag mechanisch mit dem Verschluss (23) verbunden ist, wobei der zweite Anschlag durch den Verschluss, wenn sich dieser in seiner Öffnungsstellung befindet, gegen die Klappe gedrückt wird, wodurch dann im wesentlichen jede axiale Bewegung der Klappe verhindert wird und wobei dieser zweite Anschlag durch den Verschluss, wenn sich dieser in seiner Schließstellung befindet, gegen den Gegenanschlag gedrückt wird.

2. Hydraulische vibrationsdämpfende Aufhängung nach Anspruch 1, bei der sich der erste Anschlag (16) in Berührung mit der Seite der Klappe (21) befindet, die mit der Ausgleichskammer in Verbindung steht, während sich der zweite Anschlag (18) in Berührung mit der Seite der Klappe befindet, die mit der Arbeitskammer in Verbindung steht, wobei der Stutzen außen durch ein Rohr (19) begrenzt ist, das sich gemäß der zentralen Achse (Z) von einem ersten, fest mit dem zweiten Anschlag (18) verbundenen Ende aus in Richtung auf die biegsame Wand (7) aus Elastomermaterial bis zu einem zweiten Ende erstreckt, das zumindest einen nach außen umgebogenen Rand (20) aufweist, wobei der Verschluss (23) in Achsrichtung gegen dieses zweite Ende in Richtung des Körpers aus Elastomermaterial (6) gedrückt wird, wenn sich dieser Verschluss in seiner Schließstellung befindet, wobei hierauf der zweite Anschlag (18) in Achsrichtung gegen den Gegenanschlag (lla) gedrückt wird und wobei der Verschluss fest mit einem Satz Krallen (28) verbunden ist, die um das Rohr (19) herum angeordnet sind und in Achsrichtung um dieses Rohr herum gleiten, wobei diese Krallen dergestalt bemessen sind, dass sie mit dem Rand (20) des zweiten Endes dieses Rohrs in Anschlag kommen und dann dieses Rohr und den zweiten Anschlag gegen die biegsame Wand aus Elastomermaterial ziehen, wenn sich der Verschluss in seiner Öffnungsstellung befindet, so dass dieser zweite Anschlag dann gegen die Klappe gedrückt wird.

3. Hydraulische vibrationsdämpfende Aufhängung nach Anspruch 2, bei der die Krallen (28) aus federnden Metallhaken bestehen, die aus einem einzigen an dem Verschluss (23) befestigten Blechteil (27) ausgeschnitten sind und an dem den Stutzen begrenzenden Rohr (19) eingeklinkt sind.

4. Hydraulische vibrationsdämpfende Aufhängung nach Anspruch 3, bei der das Blechteil (27), aus dem die federnden Krallen (28) ausgeschnitten sind, einen zentralen Teil aufweist, der zwischen dem Verschluss (23) und der biegsamen Wand (7) aus Elastomermaterial angeordnet ist, wobei sich jede federnde Kralle schräg in Axialrichtung in Richtung auf die starre Trennwand (8) und radial nach innen von dem zentralen Teil aus bis zu einem freien Ende hin erstreckt, das eine axiale Umbiegung (29) bildet, die sich in federnder Anlage an dem Rohr befindet und zu dem nach außen gestülpten Rand (20) dieses Rohrs hin gerichtet ist.

5. Hydraulische vibrationsdämpfende Aufhängung nach einem der Ansprüche 2 bis 4, bei der zwei Krallen (28) vorgesehen sind, die beiderseits des den Stutzen begrenzenden Rohrs (19) angeordnet sind.

6. Hydraulische vibrationsdämpfende Aufhängung nach einem der vorhergehenden Ansprüche, bei der die Steuervorrichtung eine Unterdruckkapsel (24) umfasst, die nahe bei der biegsamen Wand (7) aus Elastomermaterial außerhalb des dichten Gehäuses angeordnet ist, wobei diese Unterdruckkapsel einen Innenhohlraum (36) aufweist, der durch ein Magnetventil (38) wahlweise mit der Außenluft oder mit der Unterdruckquelle (37) in Verbindung steht, wobei dieser Innenhohlraum teilweise durch eine bewegliche Wand (32) begrenzt ist, die das Betätigungsorgan des Verschlusses darstellt und die in Axialrichtung in das Innere der Unterdruckkapsel bewegbar ist und dabei den Verschluss (23) in seine offene Stellung mitnimmt und den zweiten Anschlag (18) gegen die Klappe (21) drückt, wenn die Unterdruckkapsel mit der Unterdruckquelle in Verbindung steht, und der Innenraum der Unterdruckkapsel außerdem federelastische Mittel (40) aufweist, die die bewegliche Wand (32) gegen das dichte Gehäuse vorspannen, das mit Flüssigkeit gefüllt ist, auf welche Weise der Verschluss (23) in seine geschlossene Stellung gebracht wird und der zweite Anschlag (18) gegen den entsprechenden Gegen-anschlag (11a) gedrückt wird, wenn die Unterdruckkapsel mit der Außenluft in Verbindung steht.

7. Hydraulische vibrationsdämpfende Aufhängung nach Anspruch 6, bei der die federelastischen Mittel (40) durch eine Feder gebildet sind.

8. Hydraulische vibrationsdämpfende Aufhängung nach einem der Ansprüche 6 und 7, bei der die Unterdruckkapsel (24) eine feststehende starre Wand (30) aufweist, die mit der zweiten Bewehrung (4) fest verbunden ist, wobei die bewegliche Wand (32) dieser Kapsel einen starren zentralen Teil (33) aufweist, der mittels eines ringförmigen Balgs (34) aus Elastomermaterial dicht mit der feststehenden Wand verbunden ist.

9. Hydraulische vibrationsdämpfende Aufhängung nach einem der vorhergehenden Ansprüche, bei der die Klappe (21) ringförmig ist und den zentralen Stutzen (22) umgibt, wobei der erste und der zweite Anschlag (16, 18) der Klappe aus ringförmigen Gittern bestehen.

10. Hydraulische vibrationsdämpfende Aufhängung nach einem der vorhergehenden Ansprüche, bei der der Verschluss (23) aus einer starren runden Scheibe (25) besteht, die aus Elastomermaterial gegossen ist, wobei der zentrale Teil der biegsamen Wand (7) aus Elastomermaterial seinerseits eine starre runde Scheibe (26) aufweist, die aus Elastomermaterial gegossen ist, wobei diese zwei runden Scheiben und das Betätigungsorgan (32) des Verschlusses durch einen Niet (35), der sich in Achsrichtung durch sie hindurch erstreckt, fest miteinander verbunden sind.

11. Hydraulische vibrationsdämpfende Aufhängung nach einem der vorhergehenden Ansprüche, bei der der erste Anschlag (16) mit der Seite der Klappe (21) in Berührung steht, die mit der Ausgleichskammer in Verbindung steht, während der zweite Anschlag (18) mit der Seite der Klappe in Berührung steht, die mit der Arbeitskammer in Verbindung steht, wobei der Stutzen (22) nach außen durch ein Rohr (19) begrenzt ist, das sich längs der zentralen Achse (Z) erstreckt, wobei der Verschluss (23) von einem ersten Ende aus, das-fest mit dem zweiten Anschlag (18) verbunden ist, in Richtung auf die biegsame Wand (7) aus Elastomermaterial bis zu einem zweiten Ende, das dem Verschluss (23) benachbart ist, axial gegen dieses zweite Ende in Richtung auf den Körper aus Elastomermaterial (6) gedrückt wird, wobei wenn sich dieser Verschluss in seiner geschlossenen Stellung befindet, dann der zweite Anschlag (18) axial an den Gegenanschlag (lla) gedrückt wird und wobei der Verschluss fest mit zumindest einem starren Teil (28) verbunden ist, das axial in bezug auf das Rohr (19) gleitet, wobei dieses starre Teil (28) zumindest eine Umbiegung (29) aufweist, die dazu bestimmt ist, sich an einen Teil (20) zu legen, der fest mit dem zweiten Anschlag (18) verbunden ist, wenn sich dieser Verschluss in seiner offenen Stellung befindet, und dann werden dieses Rohr (19) und dieser zweite Anschlag (18) in Richtung auf die biegsame Wand aus Elastomermaterial gezogen, wenn sich der Verschluss in seiner offenen Stellung befindet, so dass dieser zweite Anschlag dann gegen die Klappe (21) gedrückt wird.
